# FASCICULE DE BREVET EUROPEEN

(11) **EP 2 626 154 B1**
(45) Date de publication et mention de la délivrance du brevet: **23.12.2015**
(21) Numéro de dépôt: 13354005.4
(22) Date de dépôt: 05.02.2013
(51) Int. Cl.: B21J 15/04, B21J 15/28, B21J 15/10, F16C 11/06

(54) **Nez d'un outil de traction motorisée d'une tête renflée d'élément et un tel outil**
Nase eines motorisierten Zugwerkzeugs eines gewölbten Kopfes eines Elements, und entsprechendes Werkzeug
Nose of a tool for motorised pulling of an expanded head of an element and such a tool

(30) Priorité: 10.02.2012 FR 1200401
(43) Date de publication de la demande: 14.08.2013
(73) Titulaire: Bollhoff Otalu S.A., 73490 La Ravoire (FR)
(72) Inventeur: Mattler, Claude, 73100 Mouxy (FR); Ferreire, Yann, 26140 Anneyron (FR); Macchieraldo, David, 73170 Traize (FR)
(74) Mandataire: Talbot, Alexandre

(56) Documents cités:
- EP-A1- 0 468 717
- EP-A1- 0 586 134
- GB-A- 2 435 003

## Description

### Domaine technique de l'invention

L'invention se rapporte au domaine de l'outillage, dont l'outillage employé pour la fixation en aveugle, par rivetage, d'accessoires d'assemblage. Plus précisément, elle concerne un nez d'outil de traction motorisée d'une tête renflée d'élément, telle qu'une tête sphérique de rotulage prolongeant une tige de montage et faisant partie d'un accessoire d'assemblage à fixer par rivetage.

L'invention concerne également un outil de traction motorisée d'une tête renflée d'élément sans arrachement de cette tête d'élément.

### État de la technique

Certains accessoires d'assemblage prévus pour être montés en aveugle comportent une tige engagée dans un manchon. Une extrémité de ce manchon porte un rebord destiné à venir en butée contre une paroi de support, d'un côté de celle-ci. Se trouvant l'opposé de ce rebord, une portion du manchon est destinée à être amenée de l'autre côté de la paroi de support en étant passée à travers cette paroi, puis à être tirée par la tige vers le rebord et ainsi écrasée en un bourrelet. A l'issue de la fixation, ce bourrelet et le rebord serrent entre eux la paroi de support.

La traction exercée pour déformer une portion du manchon en un bourrelet est communiquée par la tige, à laquelle cette traction doit donc d'abord être appliquée. Dans la demande de brevet européen EP-0 586 134, il est décrit un outil apte à exercer une telle traction lorsque une tête amovible équipe la tige à l'opposé de la portion destinée à être déformée en bourrelet. Cet outil opère en tirant sur la tête, puis en arrachant cette tête afin de se libérer. Il ne peut être employé qu'à la condition que la tête d'application de la traction puisse se dissocier de la tige en fin d'installation.

EP-0468717, sur lequel se base le préambule de la revendication 1, divulgue un outil exerçant une traction sur une tête renflée d'élément jusqu'à la rupture de la tige de celui-ci, et est pourvu d'un système de détection, de type buse Venturi, d'un engagement de la dite tête.

Actuellement, on ne dispose pas d'outil motorisé opérationnel pouvant exercer la traction sur la tête et se libérer ensuite, lorsque cette tête ne doit pas être arrachée.

### Objet de l'invention

L'invention a au moins pour but de proposer un outil de traction motorisée d'une tête renflée d'élément sans arrachement de cette tête d'élément.

Selon l'invention, ce but est atteint grâce à un nez d'outil de traction motorisée d'une tête renflée d'élément sans arrachement de cette tête d'élément, selon la revendication 1.

Le nez d'outil défini ci-dessus peut incorporer une ou plusieurs autres caractéristiques avantageuses, isolément ou en combinaison, en particulier parmi celles définies ci-après.

Avantageusement, un coulisseau mobile axialement comporte le fourreau, le nez d'outil comportant un agencement d'accouplement permettant un entraînement du système de capture vers l'arrière par le coulisseau lorsque le fourreau est au niveau d'une extrémité arrière de sa course axiale par rapport au système de capture.

Avantageusement, le système de capture est rappelé vers l'avant par rapport au fourreau.

Avantageusement, le nez d'outil comporte une carcasse fixe qui comporte une butée d'arrêt vers l'avant pour le système de capture.

Avantageusement, dans sa position d'attente, le poussoir est en saillie d'une quantité inférieure, axialement, à la course axiale du fourreau de manière qu'une détection d'un engagement d'une tête d'élément à l'intérieur du système de capture ne puisse pas avoir lieu lorsque le fourreau est au niveau d'une extrémité arrière de sa course axiale par rapport au système de capture.

Avantageusement, un agencement au niveau d'une zone de contact entre le resserrement intérieur et une surface extérieure du système de capture comporte au moins une rampe de transformation de la course axiale du fourreau vers l'arrière en une poussée centripète de manoeuvre du système de capture vers sa configuration rétractée.

Avantageusement, le nez d'outil comporte une carcasse fixe, éventuellement démontable, dont une portion avant forme une enclume fixe de contrepoussée.

Avantageusement, l'actionneur d'entraînement comprend un agencement de transformation par vissage d'un mouvement rotatif menant en un mouvement axial mené appliqué à un coulisseau mobile axialement comprenant le fourreau.

L'invention a également pour objet un outil de traction motorisée d'une tête renflée d'élément sans arrachement de cette tête d'élément. Cet outil comporte un nez tel que défini ci-dessus, ainsi qu'un actionneur d'entraînement axial auquel est accouplé le fourreau coulissant.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est une vue simplifiée, en coupe sagittale, d'un outil conforme à l'invention et illustre une étape préalable à la capture d'une tête d'élément d'un accessoire, par un nez de cet outil,
- les figures 2 et 3 sont des vues partielles et analogues, en coupe sagittale comme la figure 1, et illustrent des étapes successives de la capture de la tête d'élément par le nez d'outil représenté à cette figure 1,
- la figure 4 est une vue analogue à la figure 2 comme à la figure 3 et illustre la disposition générale atteinte à la fin d'une opération dans laquelle le nez d'outil des figures 1 à 3 a tiré la tête d'élément vers l'arrière.

### Description d'un mode préférentiel de l'invention

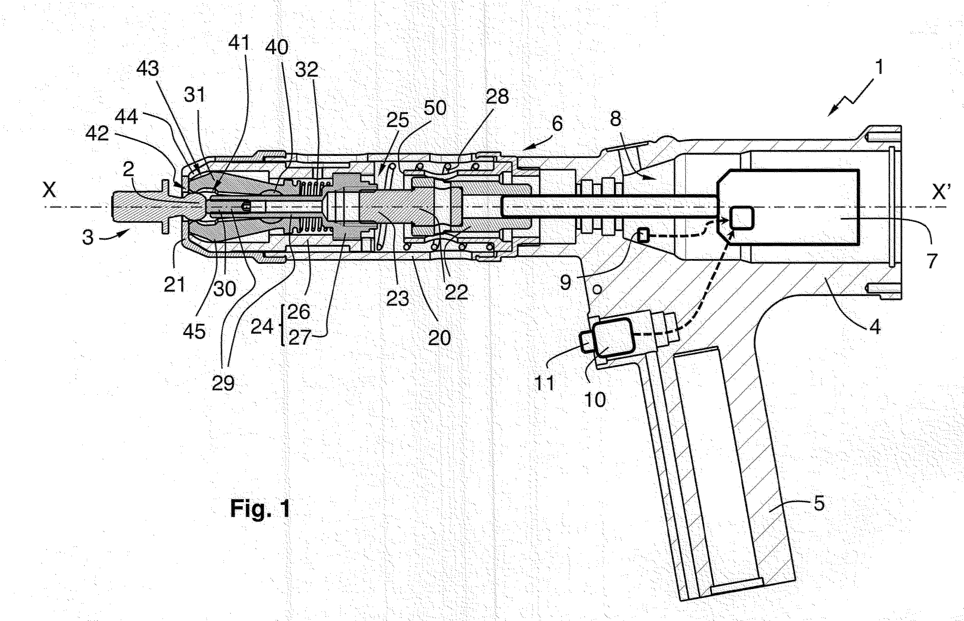

Sur la figure 1 est représenté un outil 1 conforme à l'invention. Il s'agit plus précisément d'un outil qui sert à tirer sur une tête renflée 2 d'un accessoire 3 lors de la fixation de cet accessoire à une paroi de support et qui permet de ne pas arracher cette tête 2 à l'issue de la fixation. L'accessoire 3 est représenté schématiquement dans un souci de simplicité et de clarté.

L'outil 1 a globalement la forme d'un pistolet et il comporte un corps 4 qui définit une poignée 5 et qui porte un nez amovible 6 conforme à l'invention.

Dans le présent texte et dans les revendications annexées, les termes « avant » et « arrière », ainsi que les termes analogues, se réfèrent à un utilisateur employant l'outil et, plus généralement, considèrent que l'avant d'un outil se trouve du côté de la zone de travail de cet outil.

Le corps 4 renferme des constituants connus en soi, qui sont schématisés ou omis dans un souci de clarté. L'un de ces constituants est un moteur pneumatique rotatif qui est schématisé par le rectangle 7 et qui est monté dans le logement 8.

Lui aussi schématisé à la figure 1, un dispositif 9 de détection d'un mouvement de recul est à même de commander la mise en marche et l'arrêt du moteur 7, selon un fonctionnement habituellement désigné par le terme « push-pull ». La commande du moteur 7 peut également être manuelle, ce pour quoi est prévu un dispositif de commande 10 apte à traduire une pression sur une gâchette 11 en une mise en route du moteur 7.

Le nez amovible 6 comporte une carcasse creuse 20, qui est vissée sur le corps 4 de manière à être fixe par rapport à celui-ci et qui résulte de l'assemblage par vissage de plusieurs portions d'enveloppe. Se trouvant à l'avant, l'une de ces portions d'enveloppe forme une enclume antérieure de contre-poussée 21 percée en son centre d'un passage axial pour la tête 2.

De manière avantageuse, la carcasse fixe 20, éventuellement démontable, comporte une portion avant qui forme l'enclume de contrepoussée 21. De manière préférentielle, cette enclume est fixe ce qui permet un meilleur contrôle de la déformation du rivet.

La carcasse 20 renferme un mécanisme qui est centré sur un axe antéro-postérieur X-X' et dont une transmission rotative 22 est accouplée à l'arbre de sortie du moteur 7. Une extrémité avant 23 de la transmission 22 est filetée et vissée dans un coulisseau 24, qui est bloqué en rotation. Le filetage de cette extrémité avant 22 et un taraudage complémentaire ménagé dans le coulisseau 24 forment ensemble un agencement 25 de transformation par vissage d'un mouvement rotatif menant en un mouvement axial mené appliqué au coulisseau 24. La direction de coulissement du coulisseau 24 est parallèle à l'axe antéro-postérieur X-X', qui est également l'axe de rotation de la transmission 22 et de l'arbre de sortie du moteur 7.

Le coulisseau 24 comporte deux pièces associées rigidement par vissage, à savoir un fourreau 26 et un élément central 27 se trouvant à l'intérieur de ce fourreau 26. Constitué par un ressort hélicoïdal 28, un organe élastique rappelle le coulisseau 24 vers l'avant, contre la face arrière de l'enclume 21.

L'élément central 27 définit une tige creuse d'un poussoir axial 29, dont une vis de réglage 30 forme une extrémité libre dirigée vers l'avant, en direction de l'enclume 21. En jouant sur la quantité dont la vis 30 est vissée dans la tige creuse la recevant, on peut modifier le réglage de la longueur du poussoir 29.

Le mécanisme dans la carcasse 20 comprend également un système 31 de capture d'une tête sphérique de rotulage 2. Le coulisseau 24 reçoit ce système de capture 31 tout en pouvant coulisser par rapport à lui. Formé par un ressort hélicoïdal 32 enfilé sur le poussoir 29, un organe élastique rappelle axialement le système de capture 31 vers l'avant par rapport au coulisseau 24, contre une butée d'arrêt que forme la face arrière de l'enclume 21. Comme le système de capture 31 est avantageusement rappelé vers l'avant par rapport au fourreau 26, le fourreau peut se refermer sur le corps de l'objet à saisir et non pas sur la partie proéminente.

Dans l'exemple représenté, le système de capture 31 présente la forme d'une pièce creuse d'un seul tenant, qui a la conformation globale d'un volume de révolution et dont la portion avant est plusieurs fois fendue longitudinalement de manière à pouvoir être déformée élastiquement vers une configuration rétractée. Le système de capture 31 est monté sur une rotule 40 coulissant sur le poussoir 29.

Bien entendu, le système de capture 31 peut présenter d'autres constitutions. Par exemple, il peut être formé de plusieurs doigts montés à basculement sur la rotule 40 et rappelés vers une configuration expansée de chargement par un anneau élastique qui entoure les extrémités arrières de ces doigts et qui tend à les rassembler vers l'intérieur.

Le système de capture 31 délimite un volume intérieur 41 de réception de la tête 2, ainsi qu'un passage axial avant 42 d'accès à ce volume intérieur 41 depuis le passage percé dans l'enclume 21. Au moins dans sa partie avant, le volume intérieur 41 est globalement complémentaire de la tête 2, en sorte que le système de capture 31 peut enserrer cette tête 2 sans la détériorer, en en épousant sa forme.

Le poussoir 29 pénètre par l'arrière dans le système de capture 31. Dirigée vers le passage axial 42, l'extrémité avant de ce poussoir 29 forme un bouton-poussoir saillant dans le volume intérieur 41.

L'avant du système de capture 31 définit une rampe annulaire et externe 43, qui coopère avec un resserrement interne 44 faisant partie d'une portion avant du fourreau 26. Globalement conique, la rampe 43 s'éloigne progressivement de l'axe X-X' à mesure que l'on se déplace vers l'arrière. Lorsque le fourreau 26 est déplacé vers l'arrière par rapport au système de capture 31, son resserrement 44 exerce une poussée centripète sur la rampe 43. Ce faisant, il manoeuvre le système de capture 31 en le faisant se rétracter au niveau de sa partie avant, en particulier au niveau du passage axial 42. A son extrémité arrière, la rampe 43 se termine par un rebord 45 d'accrochage du resserrement 44.

L'extrémité avant 50 d'une pièce creuse et bloquée de la carcasse 20 forme une butée d'arrêt vers l'arrière pour le coulisseau 24.

Le nez 6 présente l'avantage d'être robuste et de constitution assez simple. L'entretien qu'il requiert est en outre aisé.

Sur la figure 1, l'outil 1 est à l'attente. Le coulisseau 24 se trouve au niveau de l'extrémité avant de sa course axiale à l'intérieur de la carcasse 20 et le système de capture 31 est placé, de son propre fait, dans une configuration de chargement. Dans cette configuration de chargement, le passage axial 42 est suffisamment expansé transversalement pour pouvoir être emprunté par une tête 2 jusqu'au volume intérieur 41.

Toujours sur la figure 1, la tête sphérique 2 d'un accessoire d'assemblage 3 inséré dans une paroi de support non représentée a été engagée dans le passage 42, jusque dans la partie avant du volume intérieur 41. Elle n'appuie pas encore sur le poussoir 29.

Lorsque l'on est dans la disposition de la figure 1, on exerce une poussée dans le sens d'un enfoncement de la tête 2 dans le nez 6, de sorte que cette tête 2 appuie sur la vis 30 du poussoir 29 et actionne ainsi le coulisseau 24 vers l'arrière, à l'encontre du rappel exercé par le ressort 28.

A son tour, ce coulisseau 24 déplace vers l'arrière la transmission 22 et l'arbre de sortie du moteur 7. Détectant un recul de cet arbre de sortie, le dispositif 9 commande une mise en route du moteur 7 dans le sens d'un vissage de l'extrémité filetée 23 et donc d'un raccourcissement axial au niveau de l'agencement 25.

Alors que le coulisseau 24 est coulissé vers l'arrière, le système de capture 31 est maintenu axialement contre l'enclume 21 par le ressort 32 et il reste fixe par rapport à la carcasse 20. Il s'ensuit un mouvement relatif du fourreau 26 vers l'arrière, par rapport au système de capture 31. Lors de ce mouvement relatif, le resserrement 44 remonte vers l'arrière le long de la rampe 43 et exerce sur celle-ci une poussée centripète qui conduit l'extrémité avant du système de capture 31 à se rétracter transversalement.

L'enfoncement de la tête 2 dans le nez 6 se poursuit jusqu'à ce qu'un rebord 3A de l'accessoire d'assemblage 3 viennent en butée contre l'enclume 21. Après qu'a été stoppé son enfoncement vers l'arrière dans le nez 6, la tête 2 cesse d'appuyer sur la vis 30 du poussoir 29.

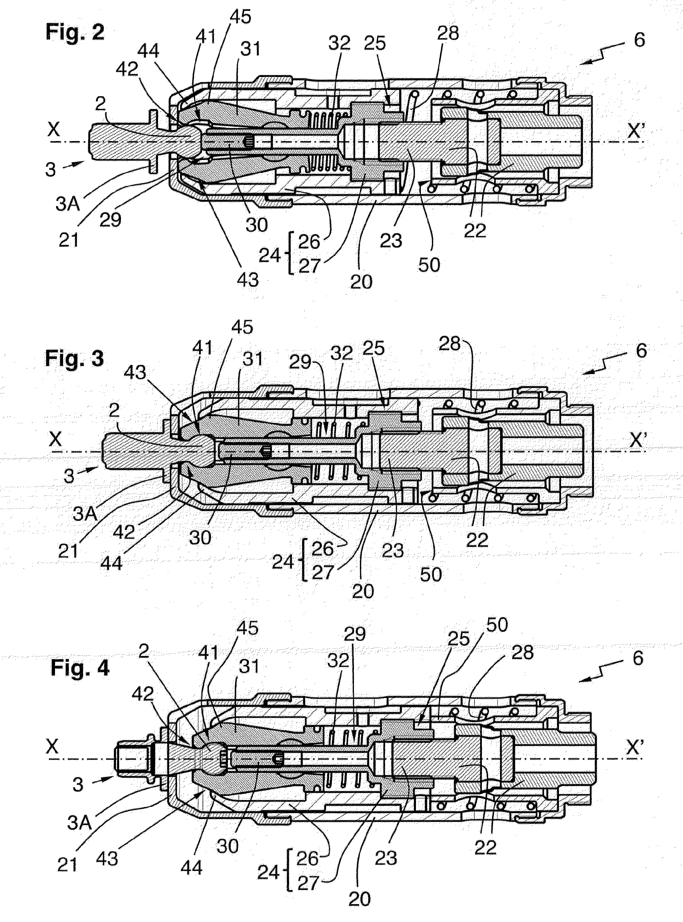

Dès que le poussoir 29 cesse d'être actionné vers l'arrière, le moteur 7 arrête d'agir, mais son axe de sortie continue de tourner quelques temps, par inertie. Il s'ensuit que le vissage de l'extrémité filetée 23 dans le coulisseau 24 et un déplacement de ce coulisseau 24 vers l'arrière se poursuivent du fait d'un entraînement inertiel, après la coupure du moteur 7, jusqu'à ce que le resserrement 44 se soit accroché vers l'arrière, au rebord 45, ce qui est le cas à la figure 3.

Sur cette figure 3, le mécanisme de préhension à l'intérieur de la carcasse 20 est immobile. Le coulisseau 24 se trouve à l'extrémité arrière de sa course axiale par rapport au système de capture 31, dont l'extrémité avant a fini de se rétracter transversalement. Le passage axial 42 s'est également rétracté au point d'être désormais trop étroit pour pouvoir être emprunté par la tête 2, qui est étroitement tenue par le système de capture 31.

Lorsque l'outil 1 est comme représenté à la figure 3, une pression manuelle sur la gâchette 11 commande une traction axiale vers l'arrière, par exemple exercée par un système non figuré travaillant comme un vérin, ou bien un redémarrage du moteur 7 dans le sens du vissage de l'extrémité filetée 23. Cela se traduit par une traction que l'extrémité filetée 23 exerce sur le coulisseau 24 et qui entraîne ce coulisseau 24 vers l'arrière. Comme son resserrement 44 est accroché au rebord 45, le coulisseau 24 entraîne à son tour le système de capture 31 qui, lui-même, tire la tête 2 vers l'arrière. Alors que le rebord de l'accessoire 3 est en appui contre la face avant de l'enclume 21, d'un côté de la paroi de support à équiper de cet accessoire 3, la traction sur la tête 2 amène un manchon de l'accessoire 3 à se déformer en bourrelet de l'autre coté de cette paroi de support, également non représentée aux figures 2 à 4.

L'entraînement du coulisseau 24, du système de capture 31 et de la tête 2 vers l'arrière s'arrête lorsque le coulisseau 24 est stoppé. La butée 50 peut arrêter ce coulisseau 24 vers l'arrière, ce qui est le cas à la figure 4. L'arrêt du coulisseau 24 vers l'arrière lors de la traction de la tête 2 peut également être causé par une augmentation de la pression détectée et enregistrée dans le système de traction lorsque le déplacement vers l'arrière est stoppé, par le mauvais positionnement ou la non conformité de l'accessoire 3 à fixer, par exemple.

L'emploi de l'outil 1 permet d'obtenir une précision élevée sur le déplacement de la tête 2 vers l'arrière et donc sur sa position finale selon la direction axiale, ce qui est avantageux.

Une détection de la venue en butée du coulisseau 24 et de son arrêt vers l'arrière provoque une commande de mise en route du moteur 7 dans un sens de dévissage de l'extrémité filetée 23. Le dévissage de cette extrémité filetée 23 et l'allongement consécutive au niveau de l'agencement 25 durent jusqu'à ce que le nez 6 retrouve sa configuration initiale de la figure 1, dans laquelle la tête 2 peut ensuite être retirée en étant passée par le même passage axial 42 qu'à son introduction, sans être arrachée ou autrement dissociée du reste de l'accessoire d'assemblage 3 désormais fixé à la paroi de support.

La suite d'étapes décrite précédemment, commençant par la capture de la tête 2 et se terminant par l'arrêt du coulisseau 24 contre la butée 50, s'effectue très rapidement, ce qui est avantageux. Il en est de même de la libération de cette tête 2 une fois sa traction finie. Un autre avantage tient à ce qu'on n'a constaté aucun endommagement visible de la forme de la tête 2 suite à sa traction à l'aide de l'outil 1.

Dans le document EP0586134, lorsque le mandrin recule il entraine le rivet qui vient forcer sur l'élément fendu (54). L'élément fendu vient s'enfoncer et il se referme poussé par la collerette. On constate que cette cinématique est dangereuse car elle est définie par le rivet.

En revanche, dans la configuration actuelle, la cinématique est différente car elle est indépendante de la déformation du rivet ce qui est plus facile à mettre en oeuvre.

## Revendications

1. Nez d'outil de traction motorisée d'une tête renflée d'élément (2), comportant :
- un système de capture (31) qui est déplaçable selon une direction axiale (X-X'), dans l'avant duquel est prévu un passage axial (42) pour la tête d'élément (2) et qui est rappelé élastiquement d'une configuration rétractée de capture de la tête d'élément (2) vers une configuration de chargement dans laquelle le passage axial (42) est expansé transversalement par rapport à la configuration rétractée,
- un fourreau coulissant (26) ayant un resserrement intérieur (44) de manoeuvre du système de capture (31) vers sa configuration rétractée moyennant une course axiale de ce fourreau (26),
- un dispositif d'accouplement du fourreau (26) à un actionneur (7, 22, 25) d'entraînement selon la direction axiale (X-X'),
- un dispositif (9, 28, 29) de détection d'un engagement de la tête d'élément (2) d'une quantité prédéterminée à l'intérieur du système de capture (31), et de commande d'un entraînement du fourreau (26) le long de sa course axiale,
**caractérisé en ce que**
- le fourreau (26) a une course axiale vers l'arrière par rapport au système de capture (31) de sorte à rétracter le système de capture (31), en cas de détection de l'engagement de la tête d'élément (2) de la quantité prédéterminée à l'intérieur du système de capture (31) par le dispositif (9, 28, 29) de détection et de commande de l'entraînement du fourreau (26),
- le dispositif (9, 28, 29) de détection comporte un poussoir axial (29) coulissant axialement par rapport au système de capture (31) et rappelé vers l'avant, en direction d'une position d'attente dans laquelle une extrémité avant de ce poussoir (29) forme un bouton-poussoir en saillie à l'intérieur du système de capture (31), vers le passage axial (42), le poussoir (29) faisant partie d'un coulisseau mobile axialement (26, 27, 30) qui comprend le fourreau (26) et qui est rappelé vers l'avant par rapport à une carcasse fixe (20) du nez,
- dans sa position d'attente, le poussoir (29) est en saillie d'une quantité inférieure, axialement, à la course axiale du fourreau (26) de manière que le dispositif de détection et de commande (9, 28, 29) puisse cesser de détecter un engagement d'une tête d'élément (2) à l'intérieur du système de capture (31) avant qu'une inertie dudit entraînement amène le fourreau (26) en fin de course vers l'arrière, par rapport au système de capture (31).

2. Nez d'outil selon la revendication 1, **caractérisé en ce qu'**un coulisseau mobile (26, 27, 30) axialement comporte le fourreau (26), le nez d'outil comportant un agencement d'accouplement (44, 45) permettant un entraînement du système de capture (31) vers l'arrière par le coulisseau (26, 27) lorsque le fourreau (26) est au niveau d'une extrémité arrière de sa course axiale par rapport au système de capture (31).

3. Nez d'outil selon l'une quelconque des revendications précédentes, **caractérisé en ce que** le système de capture (31) est rappelé vers l'avant par rapport au fourreau (26).

4. Nez d'outil selon la revendication 3, **caractérisé en ce qu'**il comporte une carcasse fixe (20) qui comporte une butée d'arrêt vers l'avant (21) pour le système de capture (31).

5. Nez d'outil selon l'une quelconque des revendications précédentes, **caractérisé en ce que**, dans sa position d'attente, le poussoir (29) est en saillie d'une quantité inférieure, axialement, à la course axiale du fourreau (26) de manière qu'une détection d'un engagement d'une tête d'élément (2) à l'intérieur du système de capture (31) ne puisse pas avoir lieu lorsque le fourreau (26) est au niveau d'une extrémité arrière de sa course axiale par rapport au système de capture (31).

6. Nez d'outil selon l'une quelconque des revendications précédentes, **caractérisé en ce qu'**un agencement au niveau d'une zone de contact entre le resserrement intérieur (44) et une surface extérieure (43) du système de capture (31) comporte au moins une rampe (43) de transformation de la course axiale du fourreau (26) vers l'arrière en une poussée centripète de manoeuvre du système de capture (31) vers sa configuration rétractée.

7. Nez d'outil selon l'une quelconque des revendications précédentes, **caractérisé en ce qu'il** comporte une carcasse fixe (20), éventuellement démontable, dont une portion avant forme une enclume fixe de contrepoussée (21).

8. Outil de traction motorisée d'une tête renflée d'élément (2) sans arrachement de cette tête d'élément (2), comportant un nez (6) selon l'une quelconque des revendications précédentes, ainsi qu'un actionneur (7, 22, 25) d'entraînement axial auquel est accouplé le fourreau coulissant (26).

## Patentansprüche

1. Nase eines motorisierten Zugwerkzeuges eines gewölbten Kopfes eines Elements (2), mit:
- einem Haltesystem (31), das in einer axialen Richtung (X-X') verschiebbar ist, in dessen vorderem Teil ein axialer Durchgang (42) für den Elementkopf (2) vorgesehen ist und das elastisch aus einer zurückgezogenen Haltekonfiguration des Elementkopfes (2) in eine Beladekonfiguration zurückgesetzt wird, in der der axiale Durchgang (42) im Vergleich zu der zurückgezogenen Konfiguration quer erweitert ist,
- einer Gleithülse (26), die eine Innere Verengung (44) der Betätigung des Haltesystems (31) in Richtung seiner zurückgezogenen Konfiguration aufweist, die einen axialen Weg dieser Hülse (26) mitteilt,
- einer Vorrichtung zur Koppelung der Hülse (26) mit einem Mitnahmeglied (7, 22, 25) in axialer Richtung (X-X'),
- einer Vorrichtung (9, 28, 29) zur Erfassung eines Eingriffs des Elementkopfes (2) in einem vorgegebenen Ausmaß in das Innere des Haltesystems (31) sowie zur Steuerung einer Mitnahme der Hülse (26) entlang ihres axialen Weges,
**dadurch gekennzeichnet, dass**
- die Hülse (26) einen axialen Weg rückwärts gegenüber dem Haltesystem (31) derart aufweist dass sie das Haltesystems (31) im Falle des Erkennens des Eingriffs des Elementkopfes (2) in dem vorgegebenen Ausmaß in das Innere des Haltesystems (31) durch die Vorrichtung (9, 28, 29) zur Erfassung und zur Steuerung der Mitnahme der Hülse (26) zurückzieht,
- die Erfassungsvorrichtung (9, 28, 29) einen axialen Stößel (29) aufweist, der axial gegenüber dem Haltesystem (31) gleitet und vorwärts in Richtung einer Wartestellung gerichtet ist, in der ein vorderes Ende dieses Stößel (29) einen aus dem Inneren des Haltesystem (31) vorstehenden Druckknopf in Richtung des axialen Durchgangs (42) bildet, wobei der Stößel (29) Teil eines axial beweglichen Schlittens (26, 27, 30) ist, der die Hülse (26) enthält und der gegenüber einem feststehenden Gehäuse (20) der Nase vorwärts gerichtet ist,
- der Stößel (29) in seiner Wartestellung in einem Ausmaß, das axial geringer als der axiale Weg der Hülse (26) ist, derart vorsteht, dass die Vorrichtung zur Erfassung und Steuerung (9, 28, 29) einen Eingriff eines Elementkopfes (2) in das Innere des Fangsystems (31) nicht mehr erfassen muss, bevor eine Trägheit dieser Mitnahme den Stößel (26) am rückwärtigen Ende des Weges gegenüber dem Haltesystem (31) mitnimmt.

2. Werkzeugnase gemäß Anspruch 1, **dadurch gekennzeichnet, dass** ein axial beweglicher Schlitten (26, 27, 30) die Hülse (26) umfasst, wobei die Werkzeugnase eine Kupplungsanordnung (44, 45) aufweist, die eine Mitnahme des Haltesystems (31) nach hinten über den Schlitten (26, 27) ermöglicht, wenn sich die Hülse (26) auf einer Höhe mit einem hinteren Ende ihres axialen Weges gegenüber dem Haltesystem (31) befindet.

3. Werkzeugnase gemäß einem der vorhergehenden Ansprüche, **dadurch gekennzeichnet, dass** das Haltesystem (31) gegenüber der Hülse (26) nach vorne gerichtet ist.

4. Werkzeugnase gemäß Anspruch 3, **dadurch gekennzeichnet, dass** diese ein feststehendes Gehäuse (20) aufweist, das einen Anschlag nach vorne (21) für das Haltesystem (31) umfasst.

5. Werkzeugnase gemäß einem der vorhergehenden Ansprüche, **dadurch gekennzeichnet, dass** der Stößel (29) in seiner Wartestellung derart in einem Ausmaß hervorsteht, das axial geringer als der axiale Weg der Hülse (26) ist, so dass eine Erfassung eines Eingriffs eines Elementkopfes (2) in das Innere des Haltesystems (31) nicht erfolgen kann, wenn sich die Hülse (26) auf einer Höhe mit einem hinteren Ende ihres axialen Weges gegenüber dem Haltesystem (31) befindet.

6. Werkzeugnase gemäß einem der vorhergehenden Ansprüche, **dadurch gekennzeichnet, dass** eine Anordnung auf einer Höhe mit einem Kontaktbereich zwischen der inneren Verengung (44) und einer äußeren Fläche (43) des Haltesystems (31) mindestens eine Rampe (43) zur Umwandlung des axialen Weges der Hülse (26) nach hinten in einen zentripetalen Betätigungsschub des Haltesystems (31) in Richtung seiner zurückgezogenen Konfiguration aufweist.

7. Werkzeugnase gemäß einem der vorhergehenden Ansprüche, **dadurch gekennzeichnet, dass** diese ein feststehendes, möglicherweise demontierbares Gehäuse (20) aufweist, dessen vorderer Abschnitt einen feststehenden Gegenschubamboss (21) bildet.

8. Motorisiertes Zugwerkzeug eines gewölbten Kopfes des Elements (2) ohne Abreißen dieses Elementkopfes (2), mit einer Nase (6) gemäß einem der vorhergehenden Ansprüche sowie einem Betätigungselement (7, 22, 25) zur axialen Mitnahme, mit dem die Gleithülse (26) gekoppelt ist.

## Claims

1. Nose of a tool for motorized pulling of an expanded element head (2), comprising:
- a catching system (31) which is movable in an axial direction (X-X'), in front of which an axial passage (42) is provided for the element head (2) and which is elastically returned from a retracted catching configuration for the element head (2) to a loading configuration in which the axial passage (42) is transversely expanded relative to the retracted configuration,
- a sliding sheath (26) comprising an internal constriction (44) for switching the catching system (31) into its retracted configuration through an axial stroke of said sheath (26),
- a device for coupling the sheath (26) to an actuator (7, 22, 25) for deriving in the axial direction (X-X'),
- a device (9, 28, 29) for detecting an engagement of the element head (2) by a predetermined amount within the catching system (31), and for controlling a drive of the sheath (26) along its axial stroke,
**characterized in that**
- the sheath (26) has a rearward axial stroke relative to the catching system (31) so as to retract the catching system (31), upon detection of the engagement of the element head (2) by the predetermined amount within the catching system (31) by the device (9, 28, 29) for detecting and controlling the drive of the sheath (26),
- the detecting device (9, 28, 29) comprises an axial pusher (29) sliding axially relative to the catching system (31) and which is forwardly returned toward a waiting position in which one front end of said pusher (29) forms a push-button protruding inside the catching system (31) toward the axial passage (42), the pusher (29) being part of an axially movable slide (26, 27, 30) which comprises the sheath (26) and which is forwardly returned relative to a fixed frame (20) of the nose,
- in its waiting position, the pusher (29) protrudes by a lower amount, in the axial direction, than the axial stroke of the sheath (26) so that the detecting and controlling device (9, 28, 29) can detect a engagement of an element head (2) inside the catching system (31) before an inertia of said drive brings the sheath (26) to the rear limit of travel relative to the catching system (31).

2. Nose of a tool according to claim 1, **characterized in that** an axially movable slide (25, 27, 30) comprises the sheath (26), the tool nose comprising a coupling arrangement (44, 45) enabling the catching system (31) to be rearwardly drive by the slide (26, 27) when the sheath (26) is at a rear limit of its axial stroke relative to the catching system (31).

3. Nose of a tool according to any one of the preceding claims, **characterized in that** the catching system (31) is forwardly returned relative to the sleeve (26).

4. Nose of a tool according to claim 3, **characterized in that** it comprises a fixed frame (20) which comprises a front stop (21) for the catching system (31).

5. Nose of a tool according to any one of the preceding claims, **characterized in that**, in its waiting position, the pusher (29) protrudes by a lower amount, in the axial direction, than the axial travel of the sleeve (26) so that an engagement of an element head (2) inside the catching system (31) cannot be detected when the sleeve (26) is at a rear limit of its axial stroke relative to the catching system (31).

6. Nose of a tool according to any one of the preceding claims, **characterized in that** an arrangement at a contact zone between the inner constriction (44) and an outer surface (43) of the catching system (31) comprises at least one ramp (43) for transforming the rearward axial stroke of the sheath (26) into a centripetal thrust for switching the catching system (31) to its retracted configuration.

7. Nose of a tool according to any one of the preceding claims, **characterized in that** it comprises a fixed frame (20), optionally removable, a front portion of which forms a fixed counter-thrust anvil (21).

8. Motorized pulling tool for an expanded element head (2) without tearing of said element head (2), comprising a nose (6) according to any one of the preceding claims, and an axial drive actuator (7, 22, 25) which is coupled to the sliding sheath (26).
